# EUROPEAN PATENT SPECIFICATION

(11) **EP 3 266 082 B1**
(45) Date of publication and mention of the grant of the patent: **30.09.2020**
(21) Application number: 16759251.8
(22) Date of filing: 10.02.2016
(51) Int. Cl.: H02G 3/02, H02S 30/10, H02S 40/32, H02S 20/23

(54) **CABLE MANAGEMENT DEVICES**
KABELVERWALTUNGSVORRICHTUNGEN
DISPOSITIFS DE GESTION DE CÂBLE

(30) Priority: 02.03.2015 US 201562127241 P; 26.10.2015 US 201514923377
(43) Date of publication of application: 10.01.2018
(73) Proprietor: SunPower Corporation, San Jose, CA 95134 (US)
(72) Inventor: RIPOLL AGULLO, Vicent, Barcelona, 08028 (ES); WARES, Brian, S., Berkeley, California 94703 (US); GRUSHKOWITZ, Tyler, Hayward, California 94541 (US)
(74) Representative: Grünecker Patent- und Rechtsanwälte PartG mbB
(86) International application number: PCT/US2016/017414
(87) International publication number: WO 2016/140786

(56) References cited:
- WO-A1-98/47212
- JP-A- 2013 042 601
- KR-B1- 100 767 824
- US-A- 4 074 885
- US-A- 4 667 913
- US-A- 5 788 403
- US-A1- 2006 201 696
- US-A1- 2014 157 868

## Description

### BACKGROUND

US 4 074 885 A relates to a ceiling support clip formed of a wire and adapted to be removably secured to a ceiling post. Photovoltaic (PV) cells, commonly known as solar cells, are well known devices for converting solar radiation into electrical energy. PV cells can be assembled into PV panels, which may be used to convert sunlight into electricity. Several PV panels may be included in a PV module system, and to maximize energy conversion, the panels are typically mounted on a support surface, e.g., a roof of a building, and tilted toward the sun. The electricity produced by the PV panels may be transmitted by wires and cables from the PV panels to electrical components of the PV module system, e.g., one or more inverters. Thus, PV module systems can have substantial wiring needs. For example, each of the PV panels in an installation can connect to a neighboring one, until the entire chain is connected to a combining device and/or an inverter. The wiring of the PV module system requires proper positioning because wiring must be isolated from external structures, e.g., the roof, and loose, dangling, or slack wiring can be hazardous. Thus, a PV module system having many rows of PV panels may require a significant amount of cable mounting materials and mounting time, which may result in a significant fraction of the cost of installing the PV module system.

### SUMMARY OF THE INVENTION

A cable support clip according to the invention is defined in claim 1. A photovoltaic module system according to the invention is defined in claims 8 and 9. A method for supporting a cable is defined in claim 11. Further advantageous embodiments are defined in the dependent claims.

### BRIEF DESCRIPTION OF THE DRAWINGS

FIG. 1 illustrates a perspective view of a photovoltaic (PV) module system, in accordance with an embodiment of the present disclosure.
FIG. 2A illustrates a perspective view of a frame rail, in accordance with an embodiment of the present disclosure.
FIG. 2B illustrates a sectional view of a frame rail, in accordance with an embodiment of the present disclosure.
FIG. 3 illustrates a side view of a PV module system having cable management devices, in accordance with an embodiment of the present disclosure.
FIG. 4 illustrates a partial perspective view of a PV module system having cable management devices, in accordance with an embodiment of the present disclosure.
FIG. 5 illustrates a perspective view of a cable support clip, in accordance with an embodiment of the present disclosure.
FIGS. 6A-6B illustrate front views of a cable support clip in a free state and a deflected state, in accordance with an embodiment of the present disclosure.
FIGS. 7A-7B illustrate side views of a cable support clip in a free state and a deflected state, in accordance with an embodiment of the present disclosure.
FIG. 8 illustrates a side view of a cable support clip holding a cable in a longitudinal cable channel, in accordance with an embodiment of the present disclosure.
FIG. 9 illustrates a side view of a cable support clip holding a cable in a transverse cable channel, in accordance with an embodiment of the present disclosure.
FIG. 10 illustrates a perspective view of a cable support stand, in accordance with an example of the present disclosure but not part of the disclosure.
FIG. 11 illustrates a transverse view of a cable support stand, in accordance with an example of the present disclosure but not part of the disclosure .
FIG. 12 illustrates a longitudinal view of a cable support stand, in accordance with an example of the present disclosure but not part of the disclosure.
FIG. 13 illustrates a bottom view of a cable support stand, in accordance with an example of the present disclosure but not part of the disclosure .
FIG. 14 illustrates a perspective view of a trough of a cable support tray, in accordance with an example of the present disclosure.
FIG. 15 illustrates a transverse view of a trough of a cable support tray, in accordance with an example of the present disclosure but not part of the disclosure .
FIG. 16 illustrates a top view of a trough of a cable support tray, in accordance with an example of the present disclosure but not part of the disclosure .
FIG. 17 illustrates a longitudinal view of a trough of a cable support tray, in accordance with an example of the present disclosure but not part of the disclosure .
FIG. 18 illustrates a perspective view of a lid of a cable support tray, in accordance with an example of the present disclosure but not part of the disclosure .
FIG. 19 illustrates a perspective view of a trough of a cable support tray, in accordance with an example of the present disclosure but not part of the disclosure .
FIG. 20 illustrates a top view of interlocked troughs, in accordance with an example of the present disclosure but not part of the disclosure .

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

This specification includes references to "one embodiment" or "an embodiment." The appearances of the phrases "in one embodiment" or "in an embodiment" do not necessarily refer to the same embodiment. Particular features, structures, or characteristics may be combined in any suitable manner consistent with this disclosure.

Terminology. The following paragraphs provide definitions and/or context for terms found in this disclosure (including the appended claims):

"Comprising." This term is open-ended. As used in the appended claims, this term does not foreclose additional structure or steps.

"Configured To." Various units or components may be described or claimed as "configured to" perform a task or tasks. In such contexts, "configured to" is used to connote structure by indicating that the units/components include structure that performs those task or tasks during operation. As such, the unit/component can be said to be configured to perform the task even when the specified unit/component is not currently operational (e.g., is not on/active). Reciting that a unit/circuit/component is "configured to" perform one or more tasks is expressly intended not to invoke 35 U.S.C. §112, sixth paragraph, for that unit/component.

"First," "Second," etc. As used herein, these terms are used as labels for nouns that they precede, and do not imply any type of ordering (e.g., spatial, temporal, logical, etc.). For example, reference to a "first" location does not necessarily imply that this location is the first location in a sequence; instead the term "first" is used to differentiate this location from another location (e.g., a "second" location).

"Coupled" - The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically.

In addition, certain terminology may also be used in the following description for the purpose of reference only, and thus are not intended to be limiting. For example, terms such as "upper," "lower," "above," "below," "in front of," and "behind" refer to directions in the drawings to which reference is made. Terms such as "front," "back," "rear," "side," "outboard," "inboard," "leftward," and "rightward" describe the orientation and/or location of portions of a component, or describe the relative orientation and/or location between components, within a consistent but arbitrary frame of reference which is made clear by reference to the text and the associated drawings describing the component(s) under discussion. Such terminology may include the words specifically mentioned above, derivatives thereof, and words of similar import.

"Inhibit" - As used herein, inhibit is used to describe a reducing or minimizing effect. When a component or feature is described as inhibiting an action, motion, or condition it may completely prevent the result or outcome or future state completely. Additionally, "inhibit" can also refer to a reduction or lessening of the outcome, performance, and/or effect which might otherwise occur. Accordingly, when a component, element, or feature is referred to as inhibiting a result or state, it need not completely prevent or eliminate the result or state.

Although discussed in the context of a photovoltaic solar installation having many solar panels, each panel with a frame, the cable management devices and techniques described herein may be equally applicable to, but by no means limited to, other types of distributed energy generation facilities, such as wind or solar thermal installations. Any installation may benefit from the advances described herein. Thus, data centers, communication racks, buildings, and similar wire carrying structures or installations can also employ the cable management devices and techniques described below.

Existing cable mounting materials for routing cabling in a PV module system include tie devices to constrain wires by holding them again structural members of the PV module system and to support them above a roof of a building. Such tie devices are typically made from materials that become brittle and break over time when exposed to outdoor conditions, e.g., nylon. Thus, although tie devices can be inexpensive on a per-unit basis, the cost for manual replacement for failed tie devices can be expensive over time. Additionally, tie devices form a single loop when closing, and as a result, force all wire-structure interactions into a single constraining relationship. Such a constraining relationship may not be appropriate for all junctions between wire and structural members. For example, where a wire passes a corner of a structural member, the tie device may force the wire into a sharp curvature to follow a surface of the structural member. Such sharp bends of the wire may adversely affect the lifetime performance of the wire. Thus, providing cable management devices that are easily mounted and are fabricated from low-cost and weather-resistant materials can reduce time and costs involved in the installation of a PV module system, as well as lifetime costs of the system.

In an aspect, a cable support clip is provided to route cables along a frame rail of a PV module system. The cable support clip may be formed from spring wire, which is a low-cost and weather-resistant material. Furthermore, the cable support clip may be easily mounted on the frame rail by deflecting the clip from a free state to a deflected state to capture the frame rail between contact surfaces of the cable support clip. Thus, the cable support clip can reduce time and costs involved in the installation of a PV module system, as well as lifetime costs of the system.

In an aspect, a cable support stand is provided to route cables of a PV module system above a support surface, e.g., a roof. The cable support stand may be formed from recycled rubber material, e.g., recycled automobile tires, which is a low-cost and weather-resistant material. Furthermore, the cable support stand may be easily mounted on the support surface and held in place by its own weight. The cables may be placed in a cable channel of the cable support stand with a simple insertion and rotation movement. Thus, the cable support stand can reduce time and costs involved in the installation of a PV module system, as well as lifetime costs of the system.

In an aspect, a cable support tray is provided to route cables over a support surface, e.g., a roof, and/or underneath PV modules of a PV module system. The cable support tray may include a trough formed from recycled rubber material, e.g., recycled automobile tires, which is a low-cost and weather-resistant material. Furthermore, the trough may be easily mounted on the support surface and held in place by its own weight. The cables may be placed in the trough, and a lid may be placed on the trough without fasteners, such that the cables are protected within a cable channel of the cable support tray. Thus, the cable support tray can reduce time and costs involved in the installation of a PV module system, as well as lifetime costs of the system.

The aspects described above may be realized by the cable management devices disclosed herein. In the following description, numerous specific details are set forth, such as specific material regimes and component structures, in order to provide a thorough understanding of embodiments of the present disclosure. It will be apparent to one skilled in the art that embodiments of the present disclosure may be practiced without these specific details. In other instances, well-known fabrication techniques or component structures, such as specific types of connectors or techniques for installing wiring, are not described in detail in order to not unnecessarily obscure embodiments of the present disclosure. Furthermore, it is to be understood that the various embodiments shown in the figures are illustrative representations and are not necessarily drawn to scale.

By way of summary, disclosed herein is a cable support clip that may be used to route wiring or cables of a PV module system along a PV module frame rail. In an embodiment, the cable support clip includes a cable retainer and a pair of arms extending from the cable retainer to a pair of clip portions. The pair of clip portions may be coupled to the cable retainer by the arms and each clip portion may include a respective upper contact surface and a respective lower contact surface. The upper contact surfaces of the clip portions may be aligned along an upper contact axis and the lower contact surfaces may be aligned along a lower contact axis. The pair of arms may be resiliently deflectable from a free state, in which the upper contact axis is below the lower contact axis, to a deflected state, in which the upper contact axis is above the lower contact axis. More particularly, the upper contact axis may be below the lower contact axis when the pair of arms are in the free state, and the upper contact axis may be above the lower contact axis when the pair of arms are in the deflected state.

One or more portions of the cable support clip may be formed from a length of wire. For example the cable support clip may be fabricated from a length of spring wire extending from a first end, e.g., at a first upper contact surface, to a second end, e.g., at a second contact surface. The length of wire may extend through several bends that form structural portions of the cable support clip, e.g., the clip portions, the arms, and/or the cable retainer. The length of wire may be a length of spring wire, which is a low-cost material, and may have a diameter in a range of 1 to 5 mm. The spring wire may be easily bent into a predetermined shape. For example, the cable retainer may include a supporting portion extending from the arms and a retaining portion extending from the supporting portion, all of which may be easily formed by bending the spring wire into the predetermined shape. Furthermore, the cable retainer may provide several cable channels to pass cabling through the cable support clip in different directions relative to a frame rail, e.g., a first cable channel running in a longitudinal direction and a second cable channel running orthogonal to the first cable channel in a transverse direction relative to the frame rail.

Also by way of summary, disclosed herein is a cable support stand that may be used to route wiring or cables of a PV module system above a support surface, e.g., a roof. In an embodiment, the cable support stand includes a base having a top surface vertically offset from a bottom surface, and several retention fingers extending from the top surface of the base. The retention fingers may include a first retention finger and a second retention finger that are separated from each other by a gap extending along a plane oriented orthogonally relative to the top surface. More particularly, the first retention finger may extend along an angular or curved path such that it includes a first lateral surface and a first lower surface. Similarly, the second retention finger may extend along an angular or curved path such that it includes a second lateral surface and a second lower surface. Accordingly, the first retention finger may define a portion of a cable channel above the top surface and between the top surface, the first lateral surface, and the first lower surface. The second retention finger may also define a portion of the cable channel above the top surface and between the top surface, the second lateral surface, and the second lower surface. The first portion of the cable channel may be longitudinally offset from the second portion across the gap separating the retention fingers from each other. In an embodiment, the first lateral surface and the second lateral surface face the cable channel in opposite directions, such that a cable located in the cable channel will be retained within the cable channel by at least one of the retention fingers when a transverse load is applied to the cable, e.g., when the cable is pushed or pulled sideways in the cable support stand.

In an embodiment, the base includes several legs that extend downward from the top surface to respective portions of the bottom surface. The legs may be separated from each other by a drainage cavity formed in the base below the top surface. Furthermore, one or more drainage channels may extend laterally outward from the drainage cavity between the legs to allow draining water, e.g., rain water running down a roof, to pass through and/or underneath the cable support stand. In an embodiment, the drainage cavity is defined by a cavity wall, and the cavity wall may be conformable to an upper shape of the cable support stand. Accordingly, the cable support stand may be stacked on top of another cable support stand, making the cable support stands easy to package and transport to an installation site.

The base may also include one or more openings in the top surface to permit drainage and/or attachment of cabling. For example, the base may include a fastening port extending from the top surface to the drainage cavity. Accordingly, cabling may be connected to the cable support stand, e.g., using a U-bolt fastened within the fastening port, to satisfy local regulations.

The cable support stand may be formed as a monolithic structure. For example, a recycled styrene-butadiene rubber material, which is a low-cost and weather-resistant material, may be used to form at least the base and the retention fingers of the cable support stand. The monolithic structure may be compression molded to form a complex structure. For example, the retention fingers of the cable support stand may be hook-shaped. That is, each retention finger may include a shank portion, a bend portion, and a point portion, interconnected along a monolithic curved structure. As an example, the shank portion of the first extension finger may extend from the top surface and include the first lateral surface, and the bend portion may extend from the shank portion and include the first lower surface. The point portion may extend from the bend portion opposite of the shank portion, and include an opposing lateral surface facing the first lateral surface across the cable channel. Thus, a cable may be retained within the cable channel by the first lateral surface and the opposing lateral surface under sideways loading.

Also by way of summary, disclosed herein is a cable support tray that may be used to route wiring or cables over a support surface, e.g., a roof, and/or underneath PV modules of a PV module system. In an embodiment, the cable support tray includes a trough having a bottom wall extending in a longitudinal direction, and two lateral walls extending upward from the bottom wall. More particularly, a first lateral wall may extend upward from the first lateral edge of the bottom wall to a first upper edge, and a second lateral wall may extend upward from a second lateral edge of the bottom wall to a second upper edge. The lateral walls may include several protrusions separated from each other along respective upper edges. For example, several protrusions extending from the first upper edge may be longitudinally separated by a first notch, and several protrusions extending from the second upper edge may be longitudinally separated by a second notch. The first notch and the second notch may be aligned with each other in a transverse direction orthogonal to the longitudinal direction such that a PV module frame may be inserted into the notches to span a width of the trough above the bottom wall.

In an embodiment, the bottom wall is shaped to direct cabling received within the trough upward toward a nearby cable support stand. For example, the bottom wall may include a central segment having a flat portion of a support surface and one or more end segments having curved portions of the support surface. Thus, cabling running along the support surface may curve away from the central segment at the end segments to be directed upward toward the nearby cable support stand. The curved end segments may be supported by a support rib, which extends downward from the end segments to a plane aligned with the flat portion of the support surface. Thus, the trough may provide a stable support for routing cabling along a rooftop. Furthermore, the trough may be formed from recycled styrene-butadiene rubber material, which is a low-cost and weather-resistant material.

The cable support tray may include features to prevent water from pooling around the cables received in the trough. For example, one or more drainage openings may extend through the support surface to allow rainwater to pass through the trough. Optionally, the cable support tray may include a lid configured to mount on the trough. The lid may include a cover portion configured to fit between the protrusions extending from the lateral walls. More particularly, the cover portion may have a width, and the width may be less than a distance between the first protrusions and the second protrusions of the trough. One or more tabs may extend laterally outward from the cover portion to mount on the upper edges of the lateral walls. Accordingly, a cable channel may be defined between the cover portion, the bottom wall, and the lateral walls when the tabs are mounted on the upper edges of the trough. Thus, the lid may provide a barrier against the entrance of rainwater into the cable channel.

The trough may include features to allow an interconnection between several cable support trays. For example an interlocking feature may extend from the ends of the trough, and the interlock feature may be configured to mesh with an adjacent interlock feature of another trough. In an embodiment, the interlock feature includes a shank portion extending longitudinally from the bottom wall, and a bend portion extending transversely from the shank portion. The interlock feature may therefore define an interlock eye between the bend portion and the bottom wall, and a corresponding shank portion of an adjacent interlock feature may fit into the interlock eye to physically interconnect the adjacent troughs.

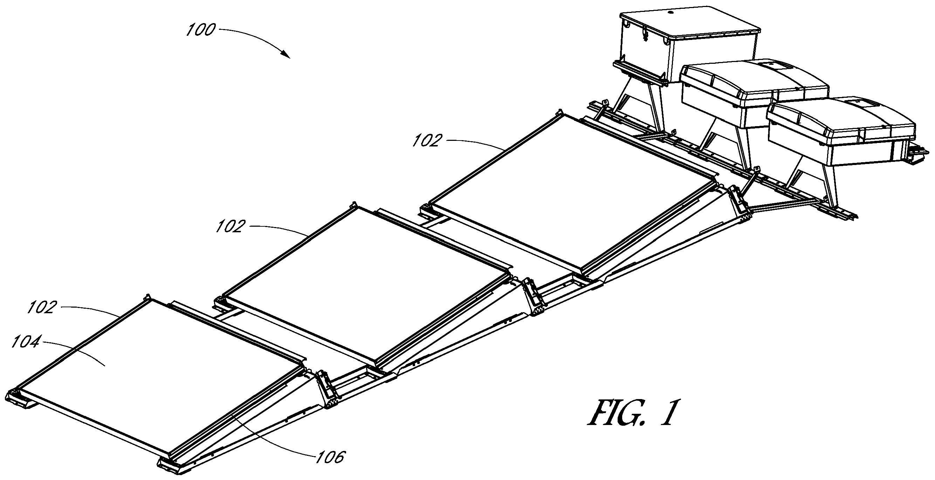

Referring to FIG. 1, a perspective view of a photovoltaic (PV) module system is illustrated in accordance with an embodiment of the present disclosure. A PV module system 100 may include one or more PV modules 102. Each PV module 102 may include a PV panel 104 supported by a module frame 106. PV panel 104 can include one or more PV cells embedded in an encapsulation material. Optionally, PV module 102 can include a protective barrier, e.g., a sheet of glass, overlying an upper and/or lower side of PV panel 104. Module frame 106 can extend around a periphery of PV panel 104 to provide structural rigidity to PV module 102.

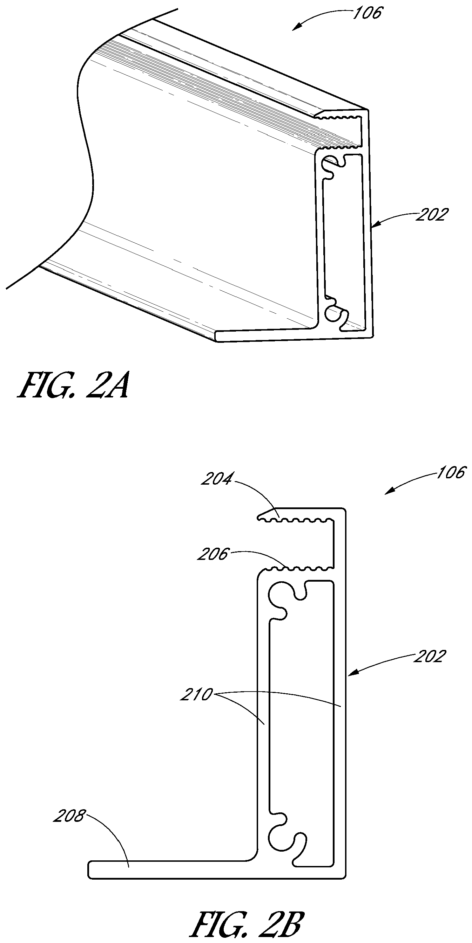

Referring to FIG. 2A, a perspective view of a frame rail is illustrated in accordance with an embodiment of the present disclosure. Module frame 106 may include a frame rail 202, a portion of which is shown, and frame rail 202 may extend in a longitudinal direction along a lateral edge of PV panel 104. More particularly, frame rail 202 may be an elongated frame member such as an aluminum extrusion, e.g., a T-slotted aluminum extrusion known in the art. In a case of a rectangular PV panel 104, four frame rails 202 may be joined at four respective corners of PV module frame 106.

Referring to FIG. 2B, a sectional view of a frame rail is illustrated in accordance with an embodiment of the present disclosure. Frame rail 202 may support PV panel 104 along a lateral edge of the panel. More particularly, module frame 106 may include a receiving section 204, which can be in the form of a slot, and may optionally include one or more internal ridge 206 to enhance an attachment to the periphery of PV panel 104. Module frame 106 may also include a lip 208 extending away from a frame sidewall in a transverse direction, i.e., orthogonal to the extruded direction of frame sidewall 210.

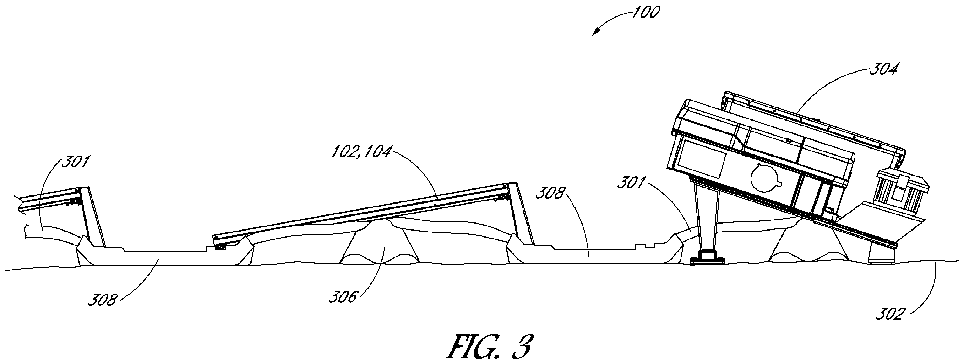

Referring to FIG. 3, a side view of a PV module system having cable management devices is illustrated in accordance with an embodiment of the present disclosure. PV module system 100 may be mounted on an external structure or support surface 302, e.g., a roof of a building. The roof may be generally horizontal (as shown) and the PV modules 102 may be mounted so as to tilt PV panels 104 toward the sun for optimal solar energy collection.

PV cells within each PV module 102 of PV module system 100 can include backside contacts cells having wiring leading to an external electrical circuits on a backside, e.g., underneath, PV panel 104. Other types of PV cells may also be used without detracting from the merits of the inventions disclosed herein. For example, the PV cells may incorporate thin-film technology, such as silicon thin films, non-silicon devices (e.g., III-V cells including GaAs, etc.). Thus, while not shown in the accompanying figures, in some embodiments, PV module 102 may include one or more components in addition to PV panel 104, such as wiring or other electrical components.

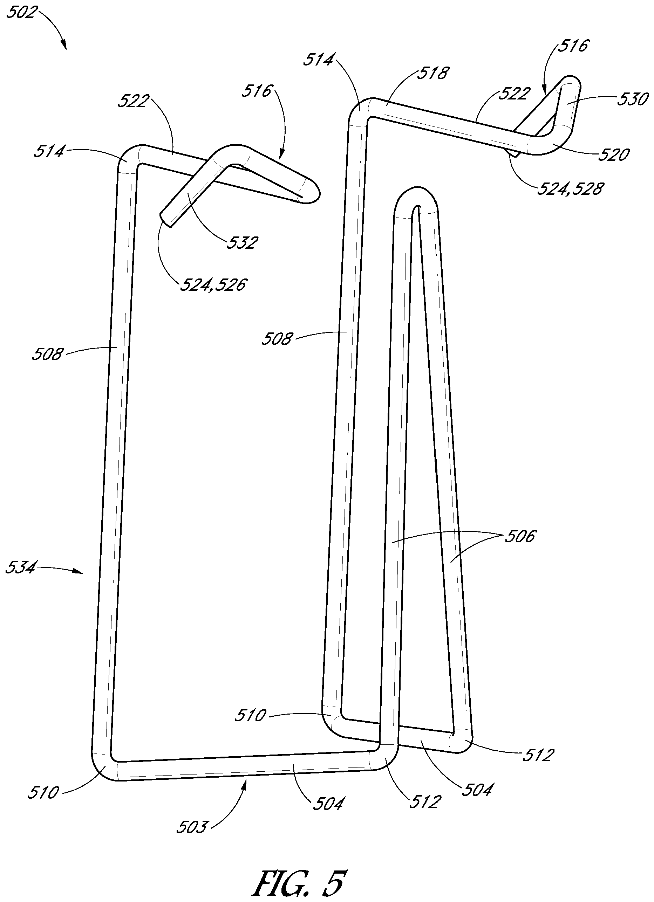

In an embodiment, PV module system 100 includes wiring and/or cabling, such as thin-walled wire conductors and/or a cable 301 to transmit AC or DC electricity between PV module 102 and system electrical components, e.g., an inverter 304. PV module system 100 may include one or more cable management devices to isolate the system wiring from external structure 302 and/or to route the wiring along a predetermined path between PV module 102 and inverter 304. For example, PV module system 100 may include a cable support clip (FIG. 5) that can be attached to frame rail 202 to route one or more cables 301 along lip 208. Furthermore, PV module system 100 may include a cable support stand 306 that can be set on top of external structure 302 to route one or more cables 301 at a predetermined height above external structure 302. Similarly, PV module system 100 may include one or more cable support tray 308 that can be set on top of external structure 302 and/or at least partially under PV module 102 to route one or more cables 301 over external structure 302 and/or under PV module 102, while electrically isolating the cables 301 from external structure 302.

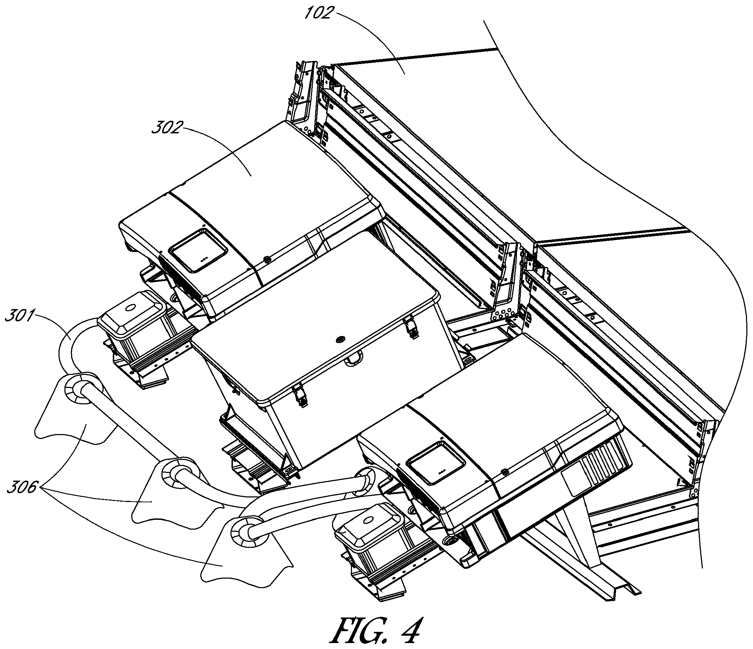

Referring to FIG. 4, a partial perspective view of a PV module system having cable management devices is illustrated in accordance with an embodiment of the present disclosure. The cable management devices described below may also be used outside of PV module system 100. For example, whereas the cable management devices may be used essentially as a distributed wiring harness system to route wiring from PV modules 102 to inverter 304 (FIG. 3), one or more of the cable management devices may also be used to route cables 301 from PV module system 100 to an external electrical station (not shown). As an example, cable support stands 306 may be used to electrically isolate cable 301 above the ground between inverter 304 and the external electrical station.

Referring to FIG. 5, a perspective view of a cable support clip is illustrated in accordance with an embodiment of the present disclosure. A cable support clip 502 may be configured to engage a portion of PV module frame 106. For example, cable support clip 502 may clip onto lip 208 of frame rail 202. More particularly, a deflection force may be applied to cable support clip 502, e.g., by squeezing cable support clip 502, to resiliently deflect cable support clip 502 from a free state to a deflected or deformed state in which lip 208 may be received between a group of contact surfaces. Upon removal of the deflection force, e.g., after releasing cable support clip 502, recovery of cable support clip 502 to the free state may be impeded by contact between the group of contact surfaces and lip 208. This inhibition of recovery may result in a spring load within the cable support clip 502 structure that causes it to lock securely onto lip 208 without the need for additional fasteners. The structure of cable support clip 502 that provides this function is described below.

Cable support clip 502 may include a cable retainer 503 to hold wiring or cables 301 near frame rail 202. Cable retainer 503 may include a shape suited to this function, such as the hook shape shown in FIG. 5. More particularly, cable retainer 503 includes one or more supporting portion 504 extending along a generally horizontal plane such that wiring may be laid on top of supporting portion 504. A retaining portion 506 extends upward from supporting portion 504 to form a lateral wall or barrier to prevent wiring from sliding sideways, e.g., in a transverse direction, from supporting portion 504.

The cable support clip 502 includes a pair of arms 508 extending from cable retainer 503. More particularly, the arms 508 extend upward from an opposite end of supporting portion 504 than retaining portion 506. For example, each arm 508 extends from a respective first support joint 510 at a first end or edge of supporting portion 504 and retaining portion 506 extends from a second support joint 512 at a second and or edge of supporting portion 504. Each arm 508 extends from first support joint 510 to a respective first contact joint 514. The arms 508 extend in a same general direction as retaining portion 506. Thus, a cable channel 1208 having a width equal to a distance between arms 508 and retaining portion 506 may be defined between the arms 508, supporting portion 504, and retaining portion 506.

Cable support clip 502 may include a pair of clip portions 516 connected to a respective arm 508. For example, a lower contact arm 518 may extend from first contact joint 514 to a second contact joint 520 along a generally horizontal plane. The lower contact arm 518 may include a lower contact surface 522. In an embodiment, lower contact surface 522 is a surface that contacts an underside of lip 208 when cable support clip 502 is placed on frame rail 202.

Each clip portion 516 may also include an upper contact surface 524. In an embodiment, upper contact surface 524 is a surface that contacts a top side of lip 208 when cable support clip 502 is placed on frame rail 202. For example, a first clip portion 516 may extend along an angulated path from a respective first contact joint 514 to a first contact end 526, and a respective upper contact surface 524 may be at first contact end 526. Similarly, a second clip portion 516 may extend along an angulated path from a respective first contact joint 514 to a second contact end 528, and a respective upper contact surface 524 may be at second contact end 528.

Clip portion 516 may include several segments between first contact joint 514 and the respective contact end. For example, in addition to lower contact arm 518 between first contact joint 514 and second contact joint 520, clip portion 516 may include a connector arm 530 and an upper contact arm 532. Connector arm 530 may be an elongated member extending from lower contact arm 518 at second contact joint 520 to an end of upper contact arm 532 opposite from the contact end. Similarly, upper contact arm 532 may be an elongated member extending from connector arm 530 to the contact end. Thus, clip portion 516 may include a series of contiguous elongated segments arranged along an angulated path between first contact joints 514 and contact ends 526, 528 with at least one of the segments having upper contact surface 524 and at least one of the segments having lower contact surface 522 offset from upper contact surface 524.

The term "joint" is used herein to denote a transition between portions of cable support clip 502 and is not necessarily a separate component that joins the portions together. More particularly, arms 508, cable retainer 503, and retaining portion 506, as well as the other portions of cable support clip 502, may be part of a same contiguous structure. That is, cable support clip 502 may be a monolithic structure. For example, in an embodiment, cable support clip 502 is formed from a continuous length of wire. That is, a wire length 534 may extend from first contact end 526 to second contact end 528 through clip portions 516, arms 508, and cable retainer 503. Wire length 534 may have a size and material composition so as to impart sufficient rigidity to the structure of cable support clip 502 such that cable support clip 502 can hold at least six cables 301 when clipped onto frame rail 202. For example, wire length 534 may be at least partly composed of spring wire having a diameter in a range of 1 to 5 mm, e.g., 2 mm. The spring wire may formed from stainless steel, e.g., grade 302 stainless steel. The wire diameter may be increased to accommodate larger cable retainers 503 and larger cables 301. One skilled in the art will appreciate that a stainless steel wire structure may be a low-cost and weather-resistant cable management solution.

In an embodiment, some but not necessarily all of the cable support clip portions are formed from wire length 534. For example, one or more of arms 508 or clip portions 516 may be formed from segments of wire length 534, however, at least a portion of cable retainer 503 may be formed from a structure other than a wire. By way of example, supporting portion 504 of cable retainer 503 may include a plate having a quadrilateral shape with two edges running along the supporting portion 504 wires shown in FIG. 5 and an additional two edges, one of which extends between the locations of first support joints 510 in FIG. 5 and another of which extends between the locations of second support joints 512 in FIG. 5.

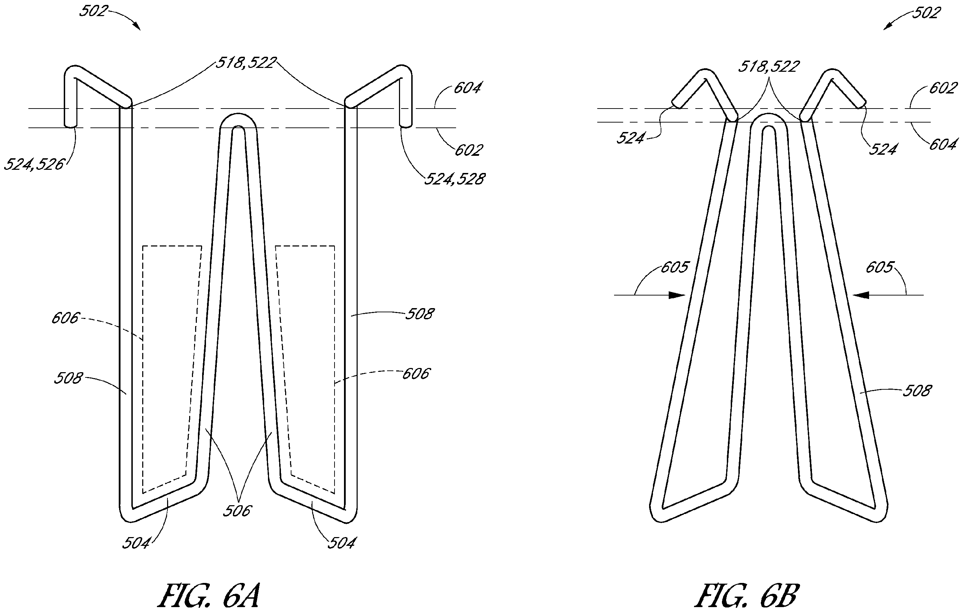

Referring to FIG. 6A, a front view of a cable support clip in a free state is illustrated in accordance with an embodiment of the present disclosure. Upper contact surfaces 524 of cable support clip 502 may be aligned along an upper contact axis 602. Upper contact axis 602 may be a reference axis and is not necessarily aligned with a particular direction, but in an embodiment, the axis passes through first contact end 526 and second contact end 528 in a longitudinal direction. Similarly, lower contact surfaces 522 of cable support clip 502 may be aligned along a lower contact axis 604. Like upper contact axis 602, in an embodiment, lower contact axis 604 is a reference line extending in the longitudinal direction through lower contact surfaces 522 on lower contact arms 518. As illustrated, lower contact arms 518 extend directly into the page.

Referring to FIG. 6B, a front view of a cable support clip in a deflected state is illustrated in accordance with an embodiment of the present disclosure. Cable support clip 502 may have an inherent springiness to allow the clip to be resiliently deflected from the free state shown in FIG. 6A, to the deflected state shown in FIG. 6B. More particularly, cable support clip 502 may be deformed from the free shape to the deflected shape by placing an inward force 605 on the arms 508, e.g., by squeezing the arms 508 in the longitudinal direction shown. In the deflected state, the upper contact axis 602 may be above the lower contact axis 604. Thus, it can be seen that when a flat plate such as lip 208 is inserted between the reference lines of upper contact axis 602 and lower contact axis 604, the plate may lie between upper contact surfaces 524 and lower contact surfaces 522 of cable support clip 502.

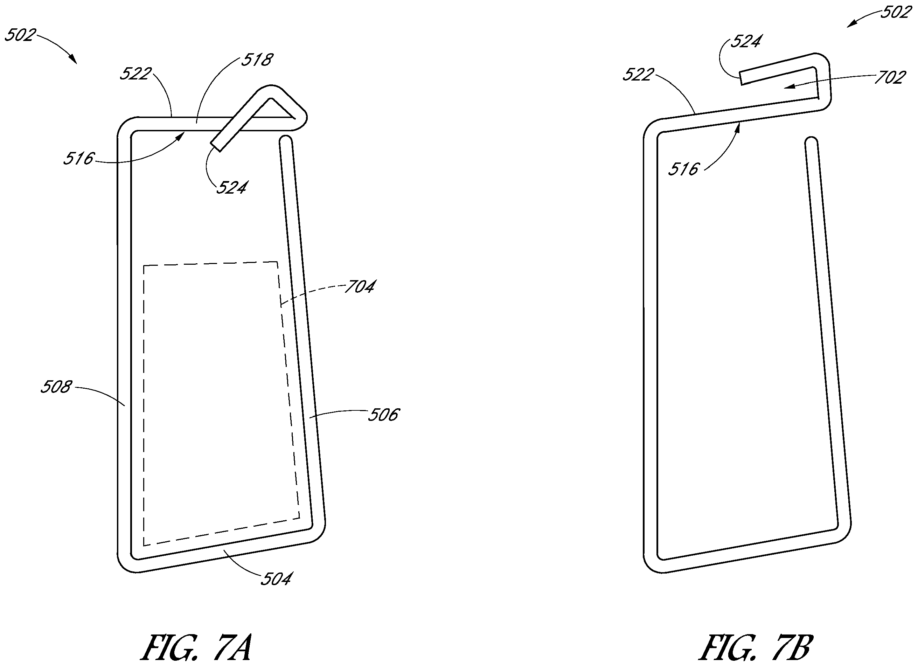

Referring to FIG. 7A, a side view of a cable support clip in a free state is illustrated in accordance with an embodiment of the present disclosure. When viewed in the longitudinal direction, upper contact surfaces 524 are seen below lower contact surfaces 522 on lower contact arms 518 when cable support clip 502 is in the free state.

Referring to FIG. 7B, a side view of a cable support clip in a deflected state is illustrated in accordance with an embodiment of the present disclosure. When viewed in the longitudinal direction, upper contact surfaces 524 are seen above lower contact surfaces 522 on the upper surface of lower contact arms 518 when cable support clip 502 is in the deflected state. Thus, in the deflected state, clip portions 516 may include a channel portion 702 defined between upper contact arm 532 and lower contact arm 518. Channel portion 702 can receive lip 208 of frame rail 202.

As described above, one or more cable channels may be defined between portions of the cable support clip 502, e.g., the arms 508, supporting portion 504, and retaining portion 506. The cable channels may be oriented to support wiring running parallel or perpendicular to frame rail 202. For example, referring to FIG. 6A, a pair of transverse cable channels 606 may be defined between either side of retaining portion 506 and a corresponding arm 508 and retaining portion 506. The transverse cable channels 606 may extend in the transverse direction, i.e., in a direction orthogonal to the installed elongated frame rail 202. Similarly, referring to FIG. 7A, a longitudinal cable channel 704 may be defined between the arms 508, supporting portion 504, and retaining portion 506. The longitudinal cable channel 704 may extend in the longitudinal direction, i.e., in a direction parallel to the installed elongated frame rail 202 and orthogonal to transverse cable channel 606.

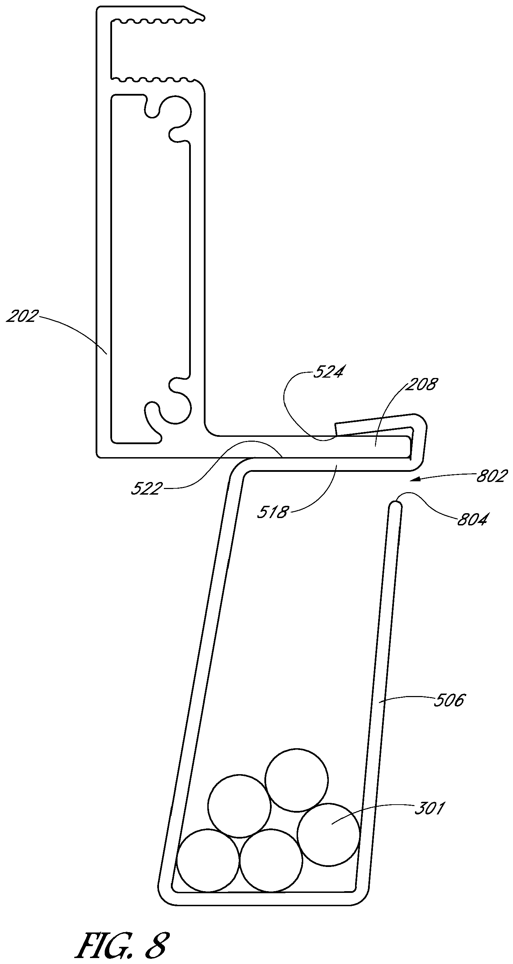

Referring to FIG. 8, a side view of a cable support clip holding a cable in a longitudinal cable channel is illustrated in accordance with an embodiment of the present disclosure. By deforming cable support clip 502 under inward force 605 to the deflected state, the clip portions 516 may be hooked onto lip 208 to engage frame rail 202. Then, when inward force 605 is removed, the torsional springiness of cable support clip 502 causes the contact surfaces to engage and bite into frame rail 202. For example, upper contact surface 524 engages a top surface of lip 208 and lower contact surface 522 engages an underside of lip 208. Thus, the difference between the installed shape and the uninstalled shape of cable support clip 502 causes the clip portion to lock onto frame rail 202 securely. In the secured state, one or more cable 301 may be inserted through an insertion channel 802 formed between an uppermost apex 804 of retaining portion 506 and an underside of lower contact arm 518 and/or lip 208. As described above, cable support clip 502 includes sufficient rigidity to support the weight of cable 301 closely against frame rail 202. Cable 301 may extend in the longitudinal direction parallel to frame rail 202 through longitudinal cable channel 704.

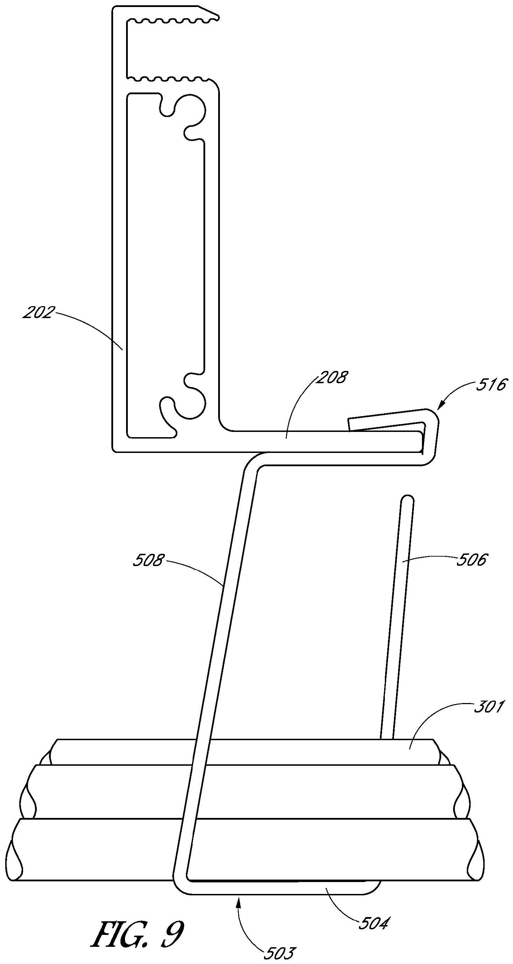

Referring to FIG. 9, a side view of a cable support clip holding a cable in a transverse cable channel is illustrated in accordance with an embodiment of the present disclosure. In an embodiment, cables 301 may be loaded into cable support clip 502 prior to installing cable support clip 502 on frame rail 202. For example, cable 301 may be loaded onto supporting portion 504 of cable retainer 503 within transverse cable channel 606 between retaining portion 506 and arm 508 when cable support clip 502 is in the free state. Cable support clip 502 may then be deformed to install the clip portions 516 onto lip 208 such that cable 301 extends in the transverse direction orthogonal to the elongated direction of frame rail 202.

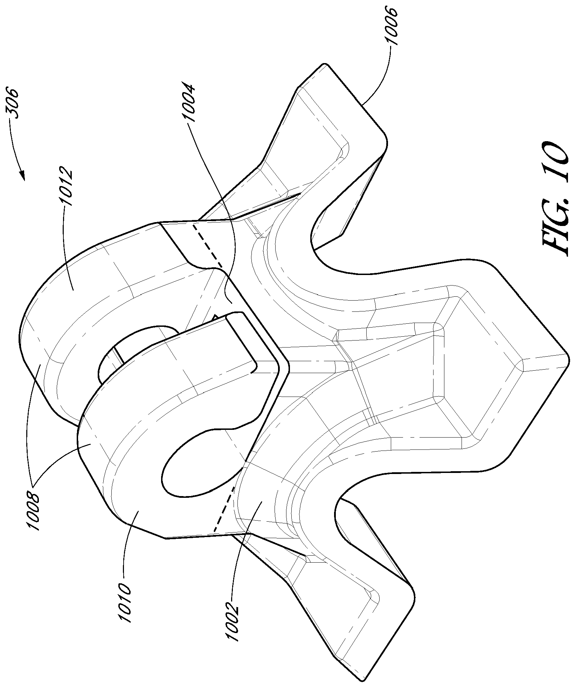

Referring to FIG. 10, a perspective view of a cable support stand is illustrated in accordance with an example of the present disclosure. Cable support stand 306 may be set on an external structure 302, e.g., a roof, and held in place by its own weight. Thus, cable support stand 306 may be stable enough to support conductors under PV panel 104 and/or above the roof without the need for external fasteners. In an example, however, cable support stand 306 may be secured to the roof using a separate fastening component, e.g., a screw or a glue joint.

Cable support stand 306 may include a body that is roughly in the form of a foursided pyramid. For example, cable support stand 306 may include a base 1002 having a top surface 1004 vertically offset from a bottom surface 1006. An outer profile of top surface 1004 may be less than an outer profile of bottom surface 1006 such that base 1002 tapers inward toward a central vertical axis from bottom surface 1006 to top surface 1004 (the profile of top surface 1004 is represented in some places by dotted lines). More particularly, top surface 1004 and bottom surface 1006 may have essentially rectangular profiles, and a width of top surface 1004 profile may be less than a width of bottom surface 1006 profile. In an example , several retention fingers 1008 extend from top surface 1004. For example, a first retention finger 1010 and a second retention finger 1012 may extend upward from top surface 1004. When top surface 1004 has a rectangular profile, first retention finger 1010 may extend from a first corner of the profile and second retention finger 1012 may extend from a second corner of the profile diagonally opposite from the first corner.

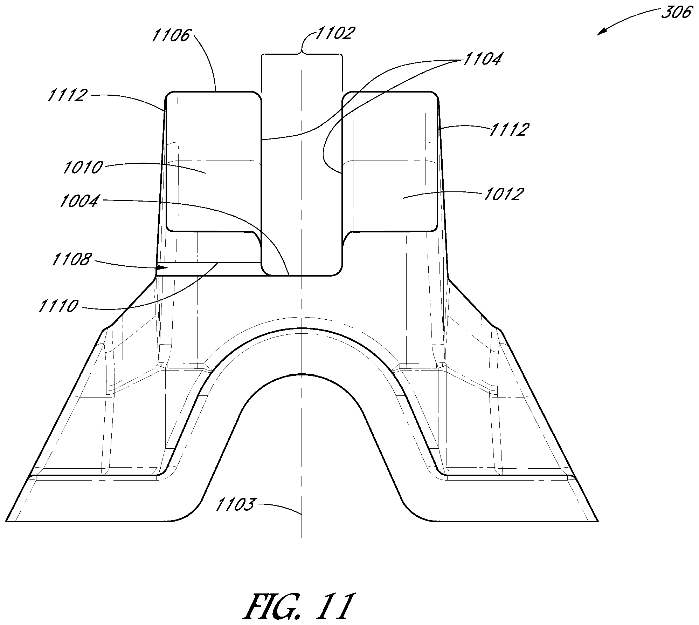

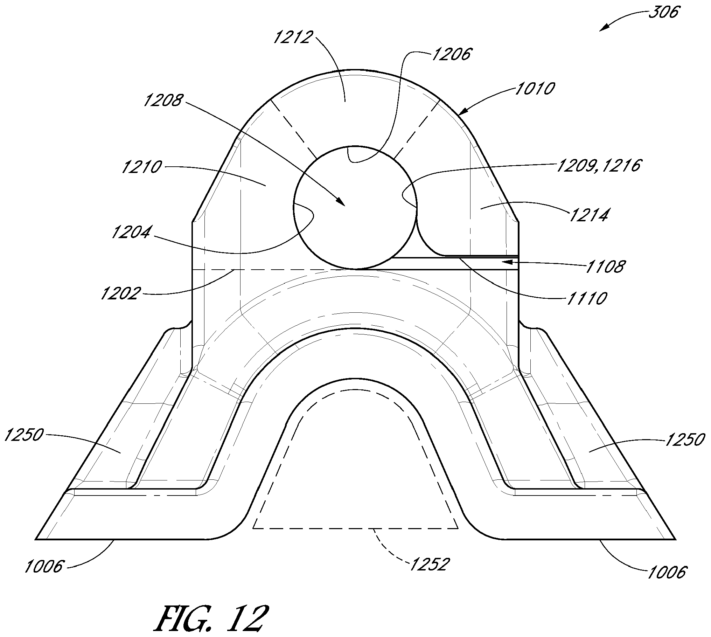

Referring to FIG. 11, a transverse view of a cable support stand is illustrated in accordance with an example of the present disclosure. First retention finger 1010 and second retention finger 1012 may be separated by a gap 1102. For example, gap 1102 may be a space between inner walls 1104 of first retention finger 1010 and second retention finger 1012, and the space may extend along a vertical plane 1103 oriented orthogonally to top surface 1004. A distance between inner walls 1104 of the retention fingers may be sized such that gap 1102 accommodates one or more cable 301 aligned with vertical plane 1103. More particularly, cable 301 may be inserted in a downward direction from a vertical height above upper surface 1106 of retention finger 1008 through gap 1102 to top surface 1004. When cable 301 is on top surface 1004 within gap 1102, cable 301 may be rotated to an orientation orthogonal to vertical plane 1103 such that it passes through insertion slot 1108 to be cradled within first retention finger 1010 and second retention finger 1012. In an example, insertion slot 1108 is a space defined between top surface 1004 and a retention finger end in a vertical direction, and between inner wall 1104 and an outer wall 1112 of the retention finger in a longitudinal direction. Here, the longitudinal direction denotes a direction parallel to a cable channel (FIG. 12) of cable support stand 306, as described below.

Referring to FIG. 12, a longitudinal view of a cable support stand is illustrated in accordance with an example of the present disclosure. First retention finger 1010 may extend from a first corner of a top surface plane 1202 aligned with top surface 1004 to finger end 1110 over another corner of top surface plane 1202. In an example, first retention finger 1010 includes an inward facing surface having a first lateral surface 1204 and a lower surface 1206. The inward surface of first retention finger 1010, including first lateral surface 1204 and lower surface 1206, define a first portion of a cable channel 1208 above top surface plane 1202 (and top surface 1004). Thus, it can be seen that when cable 301 is rotated from gap 1102 through insertion slot 1108, it aligns with and rests within cable channel 1208.

Still referring to FIG. 12, second retention finger 1012 may extend from a second corner of top surface plane 1202 diagonally opposite of the first corner from which first retention finger 1010 extends. More particularly, second retention finger 1012 may extend from top surface plane 1202 to a respective finger end such that second retention finger 1012 is essentially a mirrored image of first retention finger 1010 across vertical plane 1103 and gap 1102. As such, although second retention finger 1012 is hidden behind first retention finger 1010 in the illustration, it will be appreciated that second retention finger 1012 includes an inward surface having a second lateral surface 1209 and a second lower surface 1206 (coincident with lower surface 1206 of first retention finger 1010 in this view) facing cable channel 1208. The inward surface of second retention finger 1012 defines a second portion of cable channel 1208 above top surface plane 1202 (and top surface 1004). The respective lateral surfaces 1204, 1209 of first retention finger 1010 and second retention finger 1012, however, face cable channel 1208 in opposite directions. That is, finger end 1110 and insertion slot 1108 of second retention finger 1012 is over a corner of top surface plane 1202 that is opposite from a corner that is below finger end 1110 of first retention finger 1010. Thus, it can be seen that when cable 301 is rotated from gap 1102 through the respective insertion slots 1108 of first retention finger 1010 and second retention finger 1012, cable 301 aligns with and rests within both portions of cable channel 1208 defined by the pair of retention fingers.

In an example, one or more of first retention finger 1010 or second retention finger 1012 is hook-shaped. More particularly, the hook-shaped finger may include a shank portion 1210, a bend portion 1212, and a point portion 1214. The portions may be contiguous segments of the retention finger 1008 between top surface 1004 and finger end 1110. For example, shank portion 1210 may extend upward from top surface 1004 to bend portion 1212. Shank portion 1210 may include lateral surface of the respective retention finger 1008, e.g., first lateral surface 1204 of first retention finger 1010. Bend portion 1212 may extend from shank portion 1210 to point portion 1214 in a primarily transverse or sideways direction. Bend portion 1212 may include lower surface 1206 of the respective retention finger 1008. Point portion 1214 may extend downward from the bend portion 1212 toward finger end. Thus, point portion 1214 may include an opposing lateral surface 1216 facing a respective lateral surface 1204 and/or 1209 across cable channel 1208. Furthermore, point portion 1214 may include finger end 1110.

Based on the above description, it will be understood that retention fingers 1008 of cable support stand 306 lock wiring in place without the need for external fasteners. For example, lateral removal of cable 301 resting within cable channel 1208 will be resisted by one or more of retention fingers 1008. That is, lateral movement of cable 301 in the leftward direction of FIG. 12 is resisted by first lateral surface 1204 and/or opposing lateral surface 1216 of second retention finger 1012. Likewise, lateral movement of cable 301 in the rightward direction of FIG. 12 is resisted by second lateral surface 1209 and/or opposing lateral surface 1216 of first retention finger 1010. In addition to stabilizing cable 301 in the transverse direction, cable support stand 306 may hold cable 301 at a predetermined distance from an external structure 302, e.g., a roof. For example, top surface 1004 may be vertically offset from bottom surface 1006 by 2-6 inches, e.g., 4 inches, to allow conductors to clear PV module system structures and remain electrically isolated from the roof.

Retention fingers 1008 of cable support stand 306 may accommodate several cables 301. For example, at least six separate cables 301 may be loaded through gap 1102 and insertion slots 1108 into cable channel 1208. In an example, insertion slot 1108 may be narrower than a width of cable 301 to facilitate cable 301 retention within cable channel 1208. Accordingly, to allow cable 301 to be loaded through insertion slot 1108, retention fingers 1008 may be elastically deformable. That is, the retention fingers may be cantilevered away from top surface 1004 by pulling upward on finger end 1110 to increase the distance across insertion slot 1108 to a dimension greater than cable 301 diameter. After sliding cable 301 through insertion slot 1108 into cable channel 1208, retention finger 1008 may be released to allow it to resiliently deflect back into place and to capture cable 301 within cable channel 1208. Some material options that permit resilient deformation of retention fingers 1008 are described further below.

Cable support stand 306 may be configured to allow drainage, e.g., rain water running down a roof, to pass through and/or underneath base 1002. In an example, base 1002 includes several legs 1250. For example base 1002 may include a leg 1250 extending upward from each corner of a profile of bottom surface 1006. By way of example, bottom surface 1006 may have a rectangular profile, and thus, cable support stand 306 may include four legs 1250. Alternatively, bottom surface 1006 may have a circular profile, and in such case, cable support stand 306 may include three or more legs 1250 evenly distributed about the circumference of bottom surface 1006. Thus, each leg 1250 may include a respective portion of bottom surface 1006. One or more drainage channels 1252 may extend laterally through base 1002 between the legs 1250 of cable support stand 306 to allow drainage through cable support stand 306.

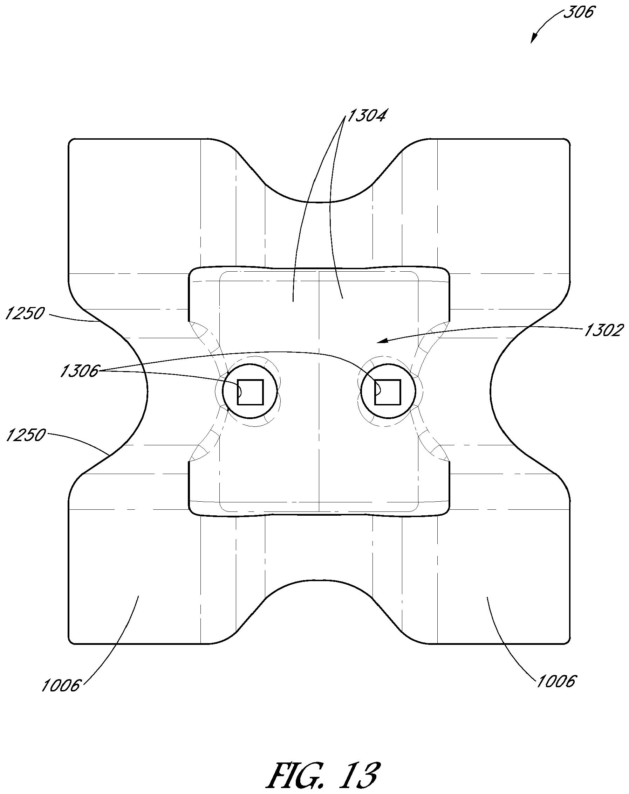

Referring to FIG. 13, a bottom view of a cable support stand is illustrated in accordance with an example of the present disclosure. In an example, legs 1250 are separated by both drainage channel 1252 and a drainage cavity 1302 below top surface 1004. For example, drainage channel 1252 may extend across the entire width of bottom surface 1006 and may intersect drainage cavity 1302 located centrally beneath top surface 1004, and between legs 1250. Accordingly, drainage channels 1252 may extend laterally outward from drainage cavity 1302 to a space surrounding cable support stand 306.

Drainage cavity 1302 may be defined by a cavity wall 1304. More particularly, cavity wall 1304 may be an inward facing surface of cable support stand 306 that faces an interior space opposite of a surrounding environment. Cavity wall 1304 may be shaped to achieve certain functional goals. For example, cavity wall 1304 may be shaped such that material usage, and therefore the cost of producing cable support stand 306, is reduced relative to cable support stand 306 having a solid base. Furthermore, drainage cavity 1302 may be shaped such that cavity wall 1304 is conformable to an upper shape of an adjacent cable support stand. Thus, cable support stand 306 may be stackable with another cable support stand having the upper shape that fits within drainage cavity 1302. As an example, when the adjacent cable support stand includes hook-shaped retention fingers 1008, like those shown in FIG. 12, drainage cavity 1302 may have an interior with a radius to receive upper surface 1106 of the retention fingers 1008. Accordingly, cable support stands 306 may be stacked efficiently and securely for transport to an installation site.

Cable support stand 306 may include other features to satisfy certain performance or regulatory specifications. For example, one or more fastening port 1306 may extend from top surface 1004 through base 1002 to drainage cavity 1302. Fastening port 1306 may provide an opening to pass a strap used for securing cables 301 to cable support stand 306. Such straps may be required by local installation regulations.

In an example, cable support stand 306 is in the form of a monolithic block of material. For example, base 1002 and retention fingers 1008 of cable support stand 306 maybe portions of a monolithic structure. The monolithic structure may be formed of any material. For purposes of energy and waste reduction, however, one or more portions of cable support stand 306 may be formed from a recycled styrene-butadiene rubber material. A source of such material may be, for example, recycled automobile tires that are shredded and bonded to form the structures described above. By way of example, the recycled rubber may be formed into the structures described above using a compression molding process. The compression molding process may include binding the ground up rubber material in a polyurethane matrix. It has been shown that a resulting cable support stand 306 may be 75% less expensive than existing cable management solutions over time, and the material provides sufficient flexibility to allow for the resilient deformation of retention fingers 1008 described above, while also having good weather resistance. Furthermore, the resulting cable support stand 306 has been shown to weigh approximately 2.5 kg, which is a sufficient weight to allow cable support stand 306 to remain on the roof under its own weight without external fasteners.

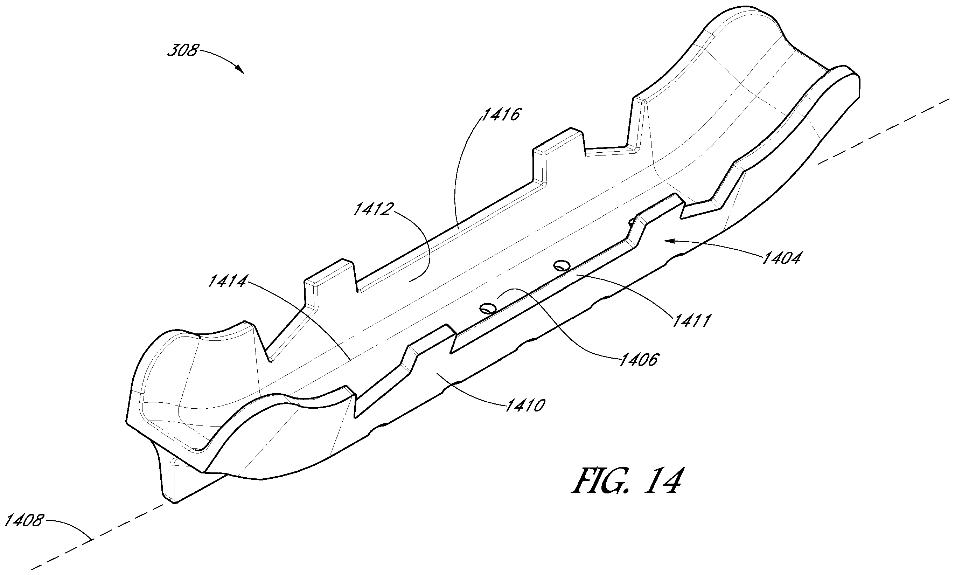

Referring to FIG. 14, a perspective view of a trough of a cable support tray is illustrated in accordance with an example of the present disclosure. A cable support tray 308 may include a trough 1404 to hold wiring and route the wiring over an external structure 302, e.g., a roof. In an example, trough 1404 includes a bottom wall 1406 extending in a longitudinal direction along a longitudinal axis 1408. Trough 1404 may also include a first lateral wall 1410 extending upward from a first lateral edge 1602 (hidden behind first lateral wall 1410) of bottom wall 1406 to a first upper edge 1411, and a second lateral wall 1412 extending upward from a second lateral edge 1414 of bottom wall 1406 to a second upper edge 1416. The lateral walls may be transversely offset from each other such that trough 1404 has a cross-section that is essentially U-shaped. Thus, trough 1404 may be shaped to receive and cradle cable 301 that is routed in a lengthwise direction.

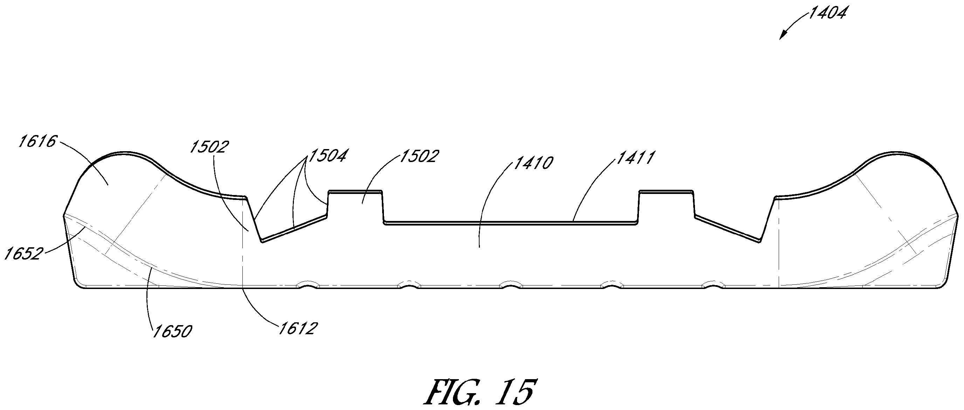

Referring to FIG. 15, a transverse view of a trough of a cable support tray is illustrated in accordance with an example of the present disclosure. Several protrusions 1502 may extend from the lateral walls of trough 1404 to form one or more notch. For example, first lateral wall 1410 may include several protrusions 1502 separated in the longitudinal direction, i.e., in a direction parallel to longitudinal axis 1408. The protrusions 1502 may include one or more notch wall 1504 to define a respective notches. For example, the leftward protrusion 1502 and the rightward protrusion 1502 shown in FIG. 15 may include respective notch walls 1504 that, when combined with a notch wall 1504 provided by first upper edge 1411, creates an essentially U-shaped notch. Such a notch may be useful, for example, to receive a corresponding frame rail 202 or wind deflector. Thus, trough 1404 may include one or more notches to facilitate relative alignment and positioning with other components of PV module system 100.

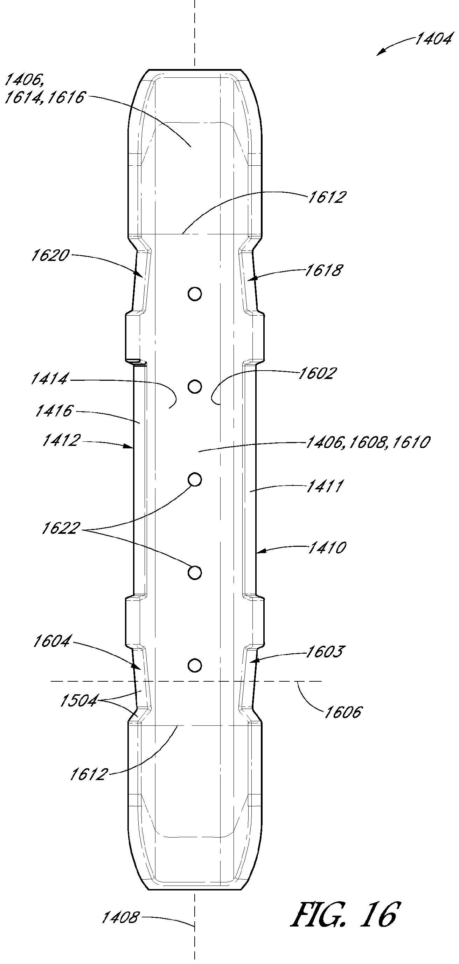

Referring to FIG. 16, a top view of a trough of a cable support tray is illustrated in accordance with an example of the present disclosure. A first notch 1603 may be formed in first lateral wall 1410 between the notch wall 1504 surfaces indicated in FIG. 15. In an example, a second notch 1604 may be formed in second lateral wall 1412 between corresponding protrusions 1502. More particularly, second lateral wall 1412 may include several protrusions 1502 separated in the longitudinal direction by second notch 1604. First notch 1603 and second notch 1604 may be aligned with each other in a transverse direction, i.e., along a transverse axis 1606. Transverse axis 1606 may be orthogonal to longitudinal axis 1408. Thus, frame rail 202 may be received within first notch 1603 and second notch 1604 and rest on first upper edge 1411 and second upper edge 1416 above cable 301 laid on bottom wall 1406 within trough 1404 along longitudinal axis 1408.

Bottom wall 1406 of trough 1404 may include a support surface 1608 along which cable 301 is routed, and support surface 1608 may be segmented for further description. Support surface 1608 may include a central segment 1610. More particularly, central segment 1610 may be a flat portion of support surface 1608 defined in the transverse direction between first lateral edge 1602 (the edge that first lateral wall 1410 extends upward from) and second lateral edge 1414, and in the longitudinal direction between one or more inflection line 1612. The flat portion may be generally planar in the longitudinal direction of trough 1404.

In addition to a flat portion, support surface 1608 may include end portions having a ramp configuration. More particularly, support surface 1608 may include a curved portion 1614 along an end segment 1616 of bottom wall 1406. For example, end segment 1616 can include one or more curvatures extending in the longitudinal direction away from inflection line 1612. The curved portion 1614 may be generally ramped upwardly, skewed relative to the planar direction of central segment 1610. By ramping upwardly, curved portion 1614 may support cable 301 in an upwardly extending configuration during use. For example, cable 301 may extend out of end segments at opposite ends of trough 1404 in an upwardly extending angle to support cable 301 above external structure 302, e.g., above the roof of a building.

Referring again to FIG. 15, end segment may include a first curvature 1650 having a radius of curvature in an upward direction from inflection line 1612, and end segment 1616 may include a second curvature 1652 having a radius of curvature in a downward direction extending away from the end of first curvature 1650. In other words, end segment may form a portion of support surface 1608 having an S-curve when viewed in the transverse direction. Curved as such, trough 1404 may provide a more continuous smooth support of cable 301.

Referring again to FIG. 16, trough 1404 may include a symmetric structure. For example, whereas first notch 1603 and second notch 1604 are aligned along a transverse axis 1606 at a first end of central segment 1610, a third notch 1618 and a fourth notch 1620 may be aligned along another transverse axis near an opposite end of central segment 1610. Thus, trough 1404 may receive a first frame rail 202 within first notch 1603 and second notch 1604 and a second frame rail 202 within third notch 1618 and fourth notch 1620 at a predetermined longitudinal distance from the first frame rail 202. Accordingly, trough 1404 may engage adjacent frame rails 202 of adjacent PV modules 102, and may be used to bridge the gap between the PV modules 102.

Trough 1404 may include one or more drainage opening 1622 through support surface 1608 and bottom wall 1406 to prevent water from pooling within trough 1404. In an example, several drainage openings 1622 are symmetrically disposed in the longitudinal direction along support surface 1608. In an example, drainage openings 1622 may also be formed through lateral walls of trough 1404 to allow water to drain sideways from trough 1404.

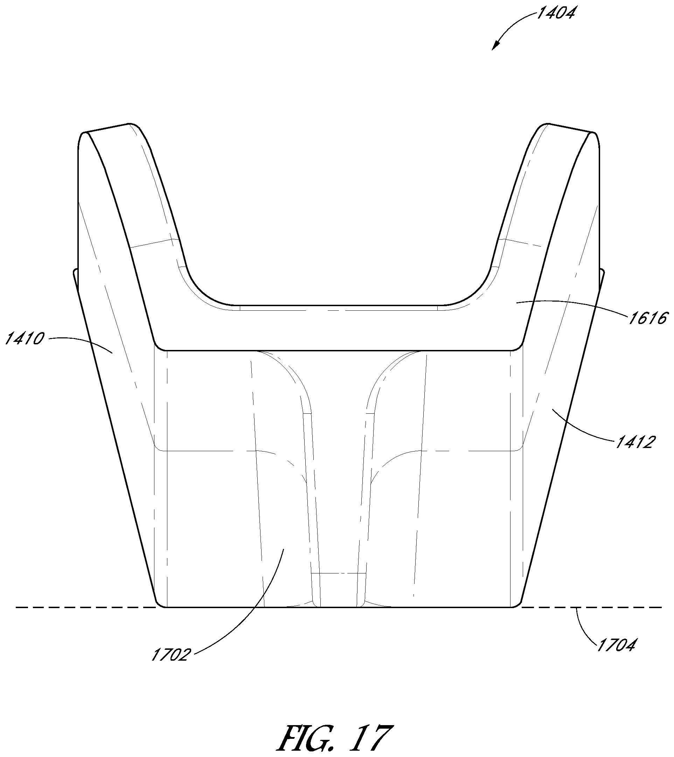

Referring to FIG. 17, a longitudinal view of a trough of a cable support tray is illustrated in accordance with an example of the present disclosure. Optionally, trough 1404 includes a support rib 1702 at one or both ends to support end segments 1616. For example, support rib 1702 may extend downward from end segment 1616 to a bottom plane 1704 aligned in the transverse direction. That is, bottom plane 1704 may be aligned with the flat portion of support surface 1608. For example, support rib 1702 may extend orthogonally relative to the flat portion. Thus, support rib 1702 may support end segments 1616 in a predetermined ramped orientation, i.e., may ensure that the ramp does not deflect under the weight of wiring or frame rail 202.

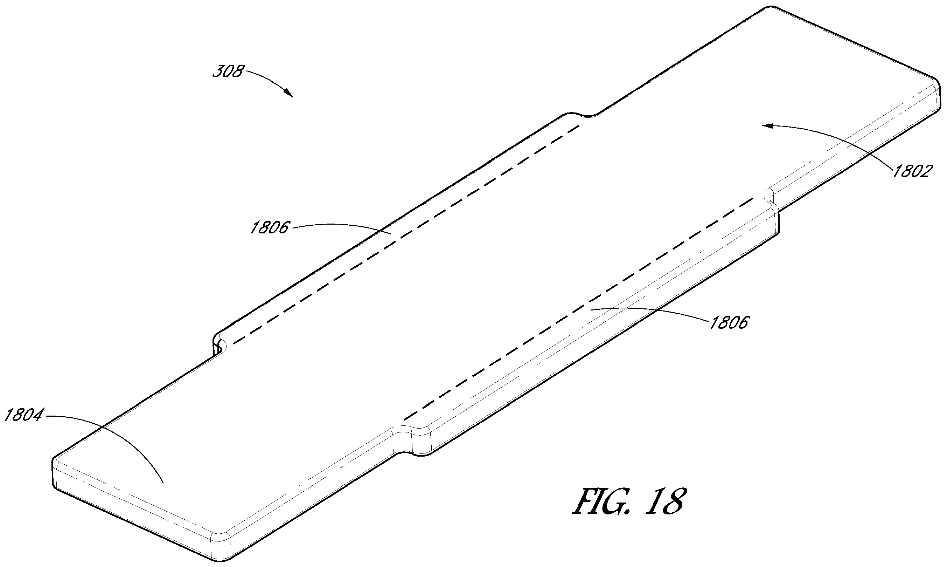

Referring to FIG. 18, a perspective view of a lid of a cable support tray is illustrated in accordance with an example of the present disclosure. Cable support tray 308 may include a lid 1802 configured to mount on trough 1404 to form an isolated channel within cable support tray 308. In an example, lid 1802 includes a cover portion 1804 having a width to allow it to fit between protrusions 1502 of first lateral wall 1410 and protrusions 1502 of second lateral wall 1412. Thus, when lid 1802 is mounted on trough 1404, a cable or wiring channel may be defined between cover portion 1804, bottom wall 1406, and the lateral walls 1410, 1412. Lid 1802 may also include one or more tab 1806 extending laterally outward from cover portion 1804. Tabs 1806 may facilitate alignment of cover portion 1804 relative to trough 1404. For example, a length of each tab 1806 in the longitudinal direction may be slightly less than a longitudinal distance between protrusions 1502 forming, e.g., first notch 1603 and third notch 1618, or second notch 1604 and fourth notch 1620. Thus, lid 1802 may be mounted on trough 1404 in a predetermined location by resting the tabs 1806 on respective first upper edge 1411 and second upper edge 1416 between the protrusions 1502 defining the longitudinally separated notches.

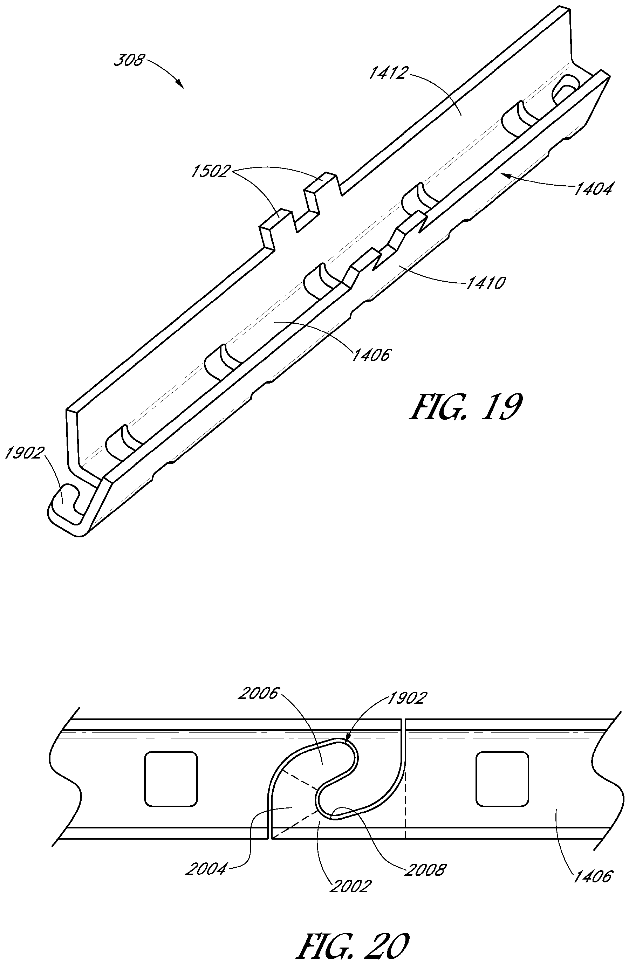

Referring to FIG. 19, a perspective view of a trough of a cable support tray is illustrated in accordance with an example of the present disclosure. Cable support tray 308 may include one or more interlocking features, e.g., an interlock 1902, to allow the ends of cable support tray 308 to engage and interconnect with an end of an adjacent cable support tray 308. As such, several cable support trays may be connected end to end to run in a continuous length underneath PV module system 100. A continuous length of cable support trays 308 maybe useful, for example, to ensure electrical isolation between cable 301 and external structure 302 when cable support stand 306 is not used to create span portions of the cable length.

Referring to FIG. 20, a top view of interlocked troughs is illustrated in accordance with an example of the present disclosure. Interlock 1902 may include a shank portion 2002 extending from bottom wall 1406 of trough 1404. For example, shank portion 2002 may extend from an end of end segment 1616. Shank portion 2002 may extend along longitudinal axis 1408 to a bend portion 2004. Using the same structural framework that was used to describe retention fingers 1008 above, bend portion 2004 may extend from shank portion 2002 in a transverse direction to a point portion 2006. Similarly, point portion 2006 may extend from bend portion 2004 in a generally longitudinal direction toward bottom wall 1406. Thus, the portions of interlock 1902 may create a hook-shaped structure that can be attached to an adjacent hook-shaped structure. More particularly, an inward facing wall of the interlock 1902 portions, i.e., an interlock wall 2008, may define an interlock eye between the bend portion 2004 and the bottom wall 1406. An adjacent interlock 1902 of an adjacent trough 1404 may be received within interlock eye to create a composite cable support tray structure.

Cable support tray 308 may be formed from similar materials as described above with respect to cable support stand 306. For example, cable support tray 308 may be compression molded from recycled automobile tires. Thus, cable support tray 308 may be formed to have a weight that allows it to rest on an external structure 302, e.g., a roof, without the need for separate fasteners. Furthermore, cable support tray 308 may be formed from low-cost materials having good weather-resistance.

Thus, cable management devices that are easily mounted and are fabricated from low-cost and weather-resistant materials have been described.

Although specific embodiments and examples have been described above, these embodiments and examples are not intended to limit the scope of the present disclosure, even where only a single embodiment or example is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

## Claims

1. A cable support clip, comprising:
a cable retainer (503);
a pair of clip portions (516), each clip portion having a respective upper contact surface (524) and a respective lower contact surface (522); and
a pair of arms (508), each arm extending from a respective first end at the cable retainer (503) to a respective second end at a respective clip portion;
wherein the upper contact surfaces (524) are aligned along an upper contact axis (602), wherein the lower contact surfaces (522) are aligned along a lower contact axis (604), wherein the upper contact axis (602) is below the lower contact axis (604) when the pair of arms (508) are in a free state, and wherein the upper contact axis (602) is above the lower contact axis (604) when the pair of arms are in a deflected state,
the cable retainer (503) includes a supporting portion (504) and a retaining portion (506) extending upward from one end of the supporting portion (504), and
each arm (508) extends upward from another end of the supporting portion (504), opposite to the one end thereof, to the respective second end of the respective clip portion, thereby the arms (508) extend in a same general direction as the retaining portion (506).

2. The cable support clip of claim 1, wherein a cable channel (1208) is defined between the arms (508), the supporting portion (504), and the retaining portion (506).

3. The cable support clip of claim 2, wherein a second cable channel (704) is orthogonal to the cable channel (1208) and is defined between the arms (508), the supporting portion (504), and the retaining portion (506).

4. The cable support clip of one of claims 1 to 3, wherein one or more of the arms (508) or the clip portions (516) are segments of a length of wire.

5. The cable support clip of claim 4, wherein the clip portions (516) include respective ends, and wherein the length of wire extends from a first one of the respective ends to a second one of the respective ends through the clip portions (516), the arms (508), and the cable retainer (503).

6. The cable support clip of claim 5, wherein the upper contact surfaces (524) are at the respective ends of the clip portions (516).

7. The cable support clip of claim 4 or 5, wherein the length of wire includes a spring wire having a diameter in a range of 1 to 5 mm.

8. A photovoltaic module system comprising:
a frame rail (202); and
a cable support clip (502) according to claim 1 attachable to the frame rail (202).

9. A photovoltaic module system comprising:
a PV module (102) comprising a PV panel (104) supported by a module frame (106); and
a cable support clip (502) according to claim 1 configured to engage a portion of the module frame (106).

10. The photovoltaic module system according to claim 8, wherein a cable (301) extends in a longitudinal direction parallel to the frame rail (202) through a longitudinal cable channel (704).

11. A method for supporting a cable in a photovoltaic module system, the method comprising:
loading the cable (301) into a cable retainer (503) of the cable support clip (502) according to claim 1;
deforming the cable support clip (502) from a free state to a deflected state to capture a frame rail (202) between upper contact surfaces (524) and lower contact surfaces (522) of the cable support clip (502).

## Patentansprüche

1. Kabelstützklammer, umfassend:
einen Kabelhalter (503);
ein Klammerabschnittspaar (516), wobei jeder Klammerabschnitt eine jeweilige obere Kontaktoberfläche (524) und eine jeweilige untere Kontaktoberfläche (522) aufweist; und
ein Zweigpaar (508), wobei sich jeder Zweig von einem jeweiligen ersten Ende am Kabelhalter erstreckt (503) zu einem jeweiligen zweiten Ende an einem jeweiligen Klammerabschnitt erstreckt;
wobei die oberen Kontaktoberflächen (524) entlang einer oberen Kontaktachse (602) ausgerichtet sind, wobei die unteren Kontaktoberflächen (522) entlang einer unteren Kontaktachse (604) ausgerichtet sind, wobei die obere Kontaktachse (602) unterhalb der unteren Kontaktachse (604) liegt, wenn sich das Zweigpaar (508) in einem freien Zustand befindet, und wobei die obere Kontaktachse (602) über der unteren Kontaktachse (604) liegt, wenn sich das Zweigpaar in einem ausgelenkten Zustand befindet,
der Kabelhalter (503) einen Stützabschnitt (504) und einen Halteabschnitt (506) umfasst, der sich von einem Ende des Stützabschnitts (504) nach oben erstreckt, und
sich jeder Zweig (508) von einem anderen Ende des Stützabschnitts (504) gegenüber dem einen Ende davon nach oben zum jeweiligen zweiten Ende des jeweiligen Klammerabschnitts erstreckt, wodurch sich die Zweige (508) in derselben allgemeinen Richtung wie der Halteabschnitt (506) erstrecken.

2. Kabelstützklammer nach Anspruch 1, wobei ein Kabelkanal (1208) zwischen den Zweigen (508), dem Stützabschnitt (504) und dem Halteabschnitt (506) definiert ist.

3. Kabelstützklammer nach Anspruch 2, wobei ein zweiter Kabelkanal (704) rechtwinklig zum Kabelkanal (1208) verläuft und zwischen den Zweigen (508), dem Stützabschnitt (504) und dem Halteabschnitt (506) definiert ist.

4. Kabelstützklammer nach einem der Ansprüche 1 bis 3, wobei ein oder mehrere der Zweige (508) oder die Klammerabschnitte (516) Segmente einer Drahtlänge sind.

5. Kabelstützklammer nach Anspruch 4, wobei die Klammerabschnitte (516) entsprechende Enden beinhalten und wobei sich die Drahtlänge von einem ersten der jeweiligen Enden zu einem zweiten der jeweiligen Enden durch die Klammerabschnitte (516), die Zweige (508) und den Kabelhalter (503) erstreckt.

6. Kabelstützklammer nach Anspruch 5, wobei sich die oberen Kontaktoberflächen (524) an den jeweiligen Enden der Klammerabschnitte (516) befinden.

7. Kabelstützklammer nach Anspruch 4 oder 5, wobei die Drahtlänge einen Federdraht umfasst, der einen Durchmesser in einem Bereich von 1 bis 5 mm aufweist.

8. Fotovoltaisches Modulsystem, umfassend:
eine Rahmenschiene (202); und
eine Kabelstützklammer (502) nach Anspruch 1, die an der Rahmenschiene (202) befestigungsfähig ist.

9. Fotovoltaisches Modulsystem, umfassend:
ein PV-Modul (102), umfassend ein PV-Panel (104), das durch einen Modulrahmen (106) gestützt wird; und
eine Kabelstützklammer (502) nach Anspruch 1, die so eingerichtet ist, dass sie in einen Abschnitt des Modulrahmens (106) eingreift.

10. Fotovoltaisches Modulsystem nach Anspruch 8, wobei sich ein Kabel (301) in Längsrichtung parallel zur Rahmenschiene (202) durch einen Längskabelkanal (704) erstreckt.

11. Verfahren zum Stützen eines Kabels in einem fotovoltaischen Modulsystem, das Verfahren umfassend:
Laden des Kabels (301) in einen Kabelhalter (503) der Kabelstützklammer (502) nach Anspruch 1;
Verformen der Kabelstützklammer (502) aus einem freien Zustand in einen ausgelenkten Zustand, um eine Rahmenschiene (202) zwischen oberen Kontaktoberflächen (524) und unteren Kontaktoberflächen (522) der Kabelstützklammer (502) zu erfassen.

## Revendications

1. Attache de support de câble, comprenant :
un dispositif de retenue de câble (503) ;
une paire de parties d'attache (516), chaque partie d'attache ayant une surface de contact supérieure respective (524) et une surface de contact inférieure respective (522) ; et
une paire de bras (508), chaque bras s'étendant depuis une première extrémité respective au niveau du dispositif de retenue de câble (503) jusqu'à une seconde extrémité respective au niveau d'une partie d'attache respective ;
dans laquelle les surfaces de contact supérieures (524) sont alignées le long d'un axe de contact supérieur (602), dans laquelle les surfaces de contact inférieures (522) sont alignées le long d'un axe de contact inférieur (604), dans laquelle l'axe de contact supérieur (602) est en dessous de l'axe de contact inférieur (604) lorsque la paire de bras (508) est dans un état libre et dans laquelle l'axe de contact supérieur (602) est au-dessus de l'axe de contact inférieur (604) lorsque la paire de bras est dans un état détourné,
le dispositif de retenue de câble (503) comprend une partie de support (504) et une partie de retenue (506) s'étendant vers le haut depuis une première extrémité de la partie de support (504), et
chaque bras (508) s'étend vers le haut depuis une autre extrémité de la partie de support (504), opposée à sa première extrémité, jusqu'à la seconde extrémité respective de la partie d'attache respective, moyennant quoi les bras (508) s'étendent dans une même direction générale que la partie de retenue (506).

2. Attache de support de câble selon la revendication 1, dans laquelle un canal de câble (1208) est défini entre les bras (508), la partie de support (504) et la partie de retenue (506).

3. Attache de support de câble selon la revendication 2, dans laquelle un deuxième canal de câble (704) est orthogonal au canal de câble (1208) et est défini entre les bras (508), la partie de support (504) et la partie de retenue (506).

4. Attache de support de câble selon l'une des revendications 1 à 3, dans laquelle un ou plusieurs des bras (508) ou des parties d'attache (516) sont des segments d'une longueur de fil.

5. Attache de support de câble selon la revendication 4, dans laquelle les parties d'attache (516) comprennent des extrémités respectives et dans laquelle la longueur de fil s'étend d'une première des extrémités respectives à une seconde des extrémités respectives à travers les parties d'attache (516), les bras (508) et le dispositif de retenue de câble (503).

6. Attache de support de câble selon la revendication 5, dans laquelle les surfaces de contact supérieures (524) sont aux extrémités respectives des parties d'attache (516).

7. Attache de support de câble selon la revendication 4 ou 5, dans laquelle la longueur de fil comprend un fil à ressort ayant un diamètre dans une plage de 1 à 5 mm.

8. Système de module photovoltaïque comprenant :
un longeron de châssis (202) ; et
une attache de support de câble (502) selon la revendication 1, pouvant être fixée au longeron de châssis (202).

9. Système de module photovoltaïque comprenant :
un module PV (102) comprenant un panneau PV (104) supporté par un châssis de module (106) ; et
une attache de support de câble (502) selon la revendication 1, conçue pour venir en prise avec une partie du châssis de module (106).

10. Système de module photovoltaïque selon la revendication 8, dans lequel un câble (301) s'étend dans une direction longitudinale parallèle au longeron de châssis (202) à travers un canal de câble longitudinal (704).

11. Procédé pour supporter un câble dans un système de module photovoltaïque, le procédé comprenant :
le chargement du câble (301) dans un dispositif de retenue de câble (503) de l'attache de support de câble (502) selon la revendication 1 ;
la déformation de l'attache de support de câble (502) d'un état libre à un état déformé pour capturer un longeron de châssis (202) entre les surfaces de contact supérieures (524) et les surfaces de contact inférieures (522) de l'attache de support de câble (502).
